# FASCICULE DE BREVET EUROPEEN

(11) **EP 0 886 366 B1**
(45) Date de publication et mention de la délivrance du brevet: **05.07.2006**
(21) Numéro de dépôt: 98401482.9
(22) Date de dépôt: 17.06.1998
(51) Int. Cl.: H02K 9/06, H02K 5/20

(54) **Alternateur à moyens de refroidissement perfectionnés, notamment pour véhicule automobile**
Wechselstromgenrator mit verbesserten Mitteln zur Kühlung, insbesondere für ein Kraftfahrzeug
Alternator with improved cooling means, in particular for an automotive vehicle

(30) Priorité: 19.06.1997 FR 9707640
(43) Date de publication de la demande: 23.12.1998
(73) Titulaire: VALEO EQUIPEMENTS ELECTRIQUES MOTEUR, 94000 Créteil (FR)
(72) Inventeur: Couvert, Pascal, 94700 Maisons-Alfort (FR); Pernin, Michel, 78380 Bougival (FR)
(74) Mandataire: Le Forestier, Eric

(56) Documents cités:
- EP-A- 0 104 450
- EP-A- 0 633 647
- DE-A- 3 410 760
- FR-A- 2 739 734
- US-A- 2 419 156
- PATENT ABSTRACTS OF JAPAN vol. 004, no. 087 (E-016), 21 juin 1980 & JP 55 053153 A (HITACHI LTD), 18 avril 1980

## Description

La présente invention a trait d'une façon générale au refroidissement des alternateurs de véhicules automobiles,

Classiquement, le refroidissement des différents éléments mécaniques et électroniques d'un alternateur (notamment roulements, bobinages composants de régulation et de redressement, etc...) est réalisé à l'aide d'un ou plusieurs ventilateurs tournant avec le rotor et coopérant avec des orifices d'entrée ou de sortie d'air ménagés dans le boîtier de l'alternateur, généralement formé autour d'un palier dit avant (côté poulie) et d'un palier dit arrière (côté redresseur et régulation).

Ainsi on connaît depuis de très nombreuses années différents types de ventilateurs, internes ou externes, axiaux ou centrifuges, ainsi que différentes combinaisons de ceux-ci. On se référera notamment au document US 4,584,496 A qui décrit un alternateur conforme au préambule de la revendication 1.

Mais il est clair que ces ventilateurs contribuent pour une part significative au coût de revient et à l'encombrement axial de l'alternateur, et qu'ils génèrent, en fonctionnement, un niveau de bruit relativement élevé.

On a par ailleurs déjà tenté, notamment en donnant au rotor une forme particulière, de lui faire jouer le rôle d'un ventilateur en créant un flux d'air entre des orifices d'entrée et des orifices de sortie formés dans le boîtier, pour ainsi obtenir un alternateur plus économique et plus compact, et de fonctionnement plus silencieux.

Cette solution, qui consiste notamment à donner au rotor une forme particulière (voir notamment EPO 0 104 450 A), est cependant désavantageuse par le fait qu'elle induit un surcoût important dans la conception et la fabrication du rotor, et que l'effet de ventilation reste malgré tout limité.

La présente invention vise à pallier les limitations de l'état de la technique et à réaliser un alternateur dans lequel un rotor symétrique soit à même de contribuer, de par sa rotation, à un effet de ventilation satisfaisant.

Plus précisément, la présente invention se base sur la découverte du fait qu'en jouant en particulier sur la géométrie des orifices d'entrée et de sortie d'air, on peut faire en sorte qu'un rotor à griffes, y compris un rotor symétrique ordinaire, engendre par lui-même, en rotation, un flux d'air interne significatif

Dans un premier cas, ce flux d'air peut venir renforcer le flux d'air produit par ailleurs par un ou plusieurs ventilateurs.

Dans un second cas, ce flux d'air peut suffire à lui seul pour assurer le refroidissement de l'ensemble des composants de l'alternateur, auquel cas l'alternateur peut être dépourvu de ventilateur spécifique.

Ainsi la présente invention propose un alternateur, notamment pour véhicule automobile, tel que défini dans la revendication 1.

Des aspects préférés, mais non limitatifs, de l'alternateur selon l'invention sont définis dans les revendications dépendantes.

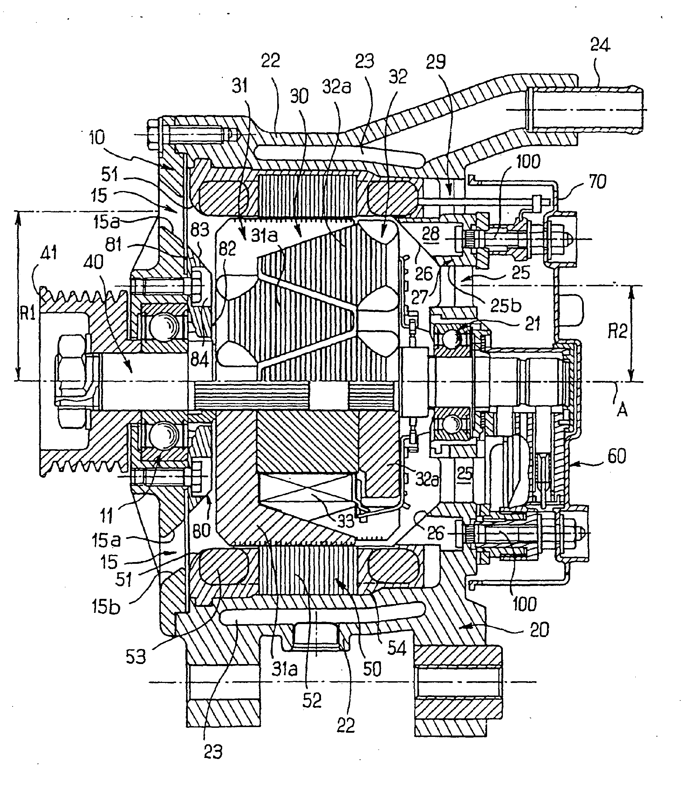

D'autres aspects, buts et avantages de la présente invention apparaîtront mieux à la lecture de la description détaillée suivante d'une forme de réalisation préférée de celle-ci, donnée à titre d'exemple et faite en référence au dessin annexé, sur lequel la figure unique est une vue en coupe axiale d'un alternateur selon la présente invention.

En référence au dessin, on a représenté un alternateur de véhicule automobile qui comprend, de façon classique en soi, un palier avant 10, un palier arrière 20, un rotor 30 monté sur un arbre 40 lui-même monté rotatif dans les deux paliers 10, 20 par l'intermédiaire de deux roulements 11, 21, une poulie 41 fixée à l'extérieur du palier avant 10 à l'extrémité antérieure de l'arbre 40, un stator 50 fixé au palier arrière de manière à se placer autour du rotor, et un ensemble 60 de balais et de composants de redressement et de régulation monté à l'extérieur du palier arrière 20 et protégé par un capot 70.

Dans le présent exemple, cet alternateur est dépourvu de tout ventilateur, tant interne qu'externe, mais l'invention telle qu'elle va être décrite ci-dessous s'applique également au cas où des moyens de ventilation à pales rotatives restent prévus.

On observera ici que l'alternateur représenté sur la figure est du type possédant des moyens de refroidissement auxiliaire par circulation de liquide. A cet effet, le palier arrière 20 comporte, au niveau de sa paroi généralement cylindrique 22 rejoignant le palier avant 10, un passage annulaire 23 pour liquide de refroidissement, adjacent au stator, ce passage 23 communiquant avec un raccord 24 d'entrée de liquide et un raccord de sortie de liquide, non représenté.

L'invention n'est toutefois nullement limitée à ce type d'alternateur à refroidissement auxiliaire par liquide.

Le rotor 30 comporte, de façon classique en soi, deux ensembles à griffes, respectivement 31, 32, comportant chacun une série de griffes, respectivement 31a, 32a, imbriquées les unes dans les autres et emprisonnant un bobinage de rotor 33.

Le stator 50 est quant à lui fretté sur la face interne de la paroi généralement cylindrique 22 du palier arrière 20.

Les griffes 31a, 32a présentent sur leurs faces extérieures des stries orientées circonférentiellement, destinées à réduire les courants de Foucault, à diminuer l'élévation de température du rotor et à accroître le rendement de l'alternateur.

Le palier arrière 20 et le palier avant 10 comportent respectivement des ouies 25 d'entrée d'air de refroidissement et des ouies 15 de sortie d'air de refroidissement, ces ouies étant, de façon classique en soi, régulièrement réparties dans deux couronnes centrées sur l'axe de rotation A.

Selon un aspect essentiel de l'invention, pour assurer la circulation d'un flux d'air de refroidissement dans l'espace intérieur de l'alternateur, et ce par le seul fait de la rotation du rotor décrit ci-dessus, les ouies d'entrée d'air 25 se trouvent à une distance moyenne R2 de l'axe de rotation A qui est plus courte que la distance moyenne R1 des ouies de sortie d'air 15 par rapport à ce même axe, tandis que les ouies d'entrée 25 et de sortie 15 présentent sensiblement la même dimension dans le sens radial. On met en jeu de cette manière une action centrifuge du rotor sur l'air, qui va donc pénétrer par les ouies les plus proches de l'axe pour sortir par les ouies qui en sont le plus éloignées.

Avantageusement, la valeur de R2 est égale environ à la moitié du rayon moyen du stator, tandis que la valeur de R1 est voisine du rayon moyen du stator, et de préférence égale environ au rayon externe du rotor.

En outre, il est avantageux de prévoir un certain nombre de dispositions permettant de limiter la résistance opposée au flux d'air de refroidissement, notamment en canalisant ce flux d'air en des régions critiques.

La première de ces dispositions consiste à donner aux ouies 15 de sortie d'air une orientation oblique dans l'épaisseur de paroi du palier avant 10. Ainsi la figure montre que ces ouvertures possèdent des parois intérieures 15a (en direction radiale) et des parois extérieures 15b (en direction radiale) qui sont sensiblement tronconiques, avec un même angle d'environ 45° par rapport à l'axe, pour ainsi faciliter la circulation d'air par effet centrifuge. Les bords de ces parois 15a et 15b, au niveau de leur transition avec les faces interne et externe du palier avant 10, sont arrondies afin également de limiter la résistance à la circulation d'air.

Une seconde disposition, complémentaire avec celle décrite ci-dessus, consiste à prolonger la paroi radialement intérieure 15a des ouies 15 jusqu'à proximité du flanc correspondant du rotor 30.

On utilise avantageusement pour ce faire la bague 80 d'arrêt du roulement avant 11, dont la configuration est judicieusement adaptée.

Ainsi cette bague d'arrêt 80 comporte une face extérieure 81 destinée à bloquer le roulement 11 en direction axiale, de façon classique en soi, et une face extérieure 82 s'étendant le long et à proximité du flanc du rotor 30.

La bague 80 comporte en outre une face radialement extérieure 83 de forme tronconique, de manière à s'étendre essentiellement dans le prolongement intérieur des parois 15a des ouies 15, entre ces dernières et le rotor 30.

La bague comporte également une pluralité d'ouvertures 84 pour des boulons destinés à sa fixation au palier avant 10 immédiatement à l'extérieur du roulement 11 en direction radiale.

Une troisième disposition, complémentaire des deux premières, consiste à adapter la forme du stator lorsque les ouies de sortie d'air s'étendent, en direction radiale, au voisinage de celui-ci. Cette adaptation consiste à arrondir l'arête circulaire du stator adjacente aux parois extérieures 15b des ouies 15, de telle manière qu'il existe une certaine continuité entre cet arrondi et les parois 15b. Un tel arrondi est désigné par la référence 51. Cette caractéristique est particulièrement aisée à obtenir lorsque, comme dans le présent exemple, le stator est réalisé par surmoulage de matière plastique 54 sur la carcasse 52 et les enroulements de phases 53 du stator.

Selon une autre disposition avantageuse de l'invention, on prévoit au niveau des ouies d'entrée d'air 25 des moyens pour faciliter l'écoulement d'air à son entrée dans la cavité de l'alternateur.

Ces moyens consistent en une paroi tronconique 26 s'étendant entre les parois extérieures 25b, cylindriques, des ouies d'entrée d'air 25 et le stator, cette paroi tronconique rejoignant le stator sensiblement dans le plan du flanc côté arrière du rotor, comme illustré.

Cette paroi 26 est avantageusement celle d'une aménagement en saillie 27 formé sur le palier arrière 20, afin de ne pas augmenter le nombre de pièces nécessaires pour le montage.

On observera ici que la paroi tronconique 26 est généralement pleine, à l'exception d'un nombre limité d'emplacements, par lesquels passe la coupe de la figure, dans lesquels sont ménagés des orifices 28 pour des vis 100 de montage du circuit de redressement et du capot 70 de l'alternateur.

On comprend que la paroi tronconique 26 a pour effet d'éviter l'accumulation de tourbillons d'air, inefficaces pour le refroidissement, dans la zone tranquille qui, autrement, serait définie dans la région de coin annulaire formée par le stator 50 et la paroi radiale du palier arrière.

L'aménagement 27 permet en outre, dans la configuration telle que représentée, d'obturer d'autres passages d'air 29, situés radialement à l'extérieur des ouies 25 et destinés en particulier au passage des connexions électriques du stator vers le redresseur, passages qui autrement tiendraient lieu d'entrées d'air additionnelles et atténueraient le débit du flux d'air lié à l'action centrifuge précitée.

On réalise ainsi, grâce à la présente invention, un alternateur sans ventilateurs dans lequel une ventilation efficace est assurée par la seule action du rotor, grâce aux dispositions décrites.

On notera ici que le rotor peut bien entendu être adapté de manière à renforcer le flux d'air, en jouant par exemple sur la forme des interstices entre griffes adjacentes.

Bien entendu, la présente invention n'est nullement limité à la forme de réalisation décrite ci-dessus

## Revendications

1. Alternateur, notamment pour véhicule automobile, du type comprenant un boîtier (10, 20) portant un stator (50) et dans lequel est monté à rotation un rotor (30) à griffes imbriquées (31a, 32a), et le boîtier comportant des ouies d'entrée et de sortie d'air de refroidissement, ces ouies consistant en des ouies (25) d'entrée d'air de refroidissement situées sur un premier côté axial du boîtier et en des ouies (15) de sortie d'air de refroidissement situées sur un côté axial opposé du boîtier, ces ouies étant régulièrement réparties dans deux couronnes centrées sur l'axe de rotation (A) du rotor, les ouies d'entrée d'air (25) étant situées à plus grande proximité de l'axe de rotation du rotor que des ouies de sortie d'air (15), l'alternateur étant **caractérisé en ce que** les ouies de sortie d'air (15) présentent des parois radialement intérieures (15a) orientées en oblique, en s'éloignant de l'axe de rotation (A) de l'intérieur du boîtier vers l'extérieur, de manière qu'une circulation d'air par effet centrifuge par la rotation du rotor (30) soit favorisée.

2. Alternateur selon la revendication 1, **caractérisé en ce que** les ouies de sortie d'air (15) présentent des parois radialement extérieures (15b) orientées en oblique, en s'éloignant de l'axe de rotation (A) de l'intérieur du boîtier vers l'extérieur.

3. Alternateur selon l'une des revendications 1 et 2, **caractérisé en ce que** l'orientation desdites parois radialement intérieures est d'environ 45° par rapport à l'axe de l'alternateur.

4. Alternateur selon la revendication 2 ou la revendication 3 prise dans la dépendance de la revendication 2, **caractérisé en ce que** les parois radialement intérieures (15a) et les parois radialement extérieures (15b) présentent sensiblement la même orientation.

5. Alternateur selon l'une des revendications 1 à 4, **caractérisé en ce qu'**il comprend également une paroi orientée en oblique (83) située sensiblement dans le prolongement des parois radialement intérieures (15a) des ouies (15) de sortie d'air et s'étendant entre une paroi (10) du boîtier dans laquelle sont formées lesdites ouies de sortie d'air et un flanc adjacent du rotor (30).

6. Alternateur selon la revendication 5, **caractérisé en ce que** ladite paroi orientée en oblique (83) est définie par une bague de retenue (80) d'un roulement (11) prévu entre un arbre (40) de rotor et la paroi de boîtier (10) dans laquelle sont formées les ouies de sortie d'air (15).

7. Alternateur selon l'une des revendications 1 à 6, **caractérisé en ce que** les parois radialement intérieures (15a) et radialement extérieures (15b) des ouies de sortie d'air (15) s'étendent respectivement à plus courte distance et à plus grande distance de l'axe de rotation (A) qu'une face interne du stator (50), et **en ce que** le stator comporte de façon adjacente auxdites ouies de sortie d'air une paroi (51) s'étendant généralement dans le prolongement des parois radialement extérieures (15b) desdites ouies.

8. Alternateur selon la revendication 7, **caractérisé en ce que** ladite paroi du stator consiste en un arrondi (51) formé au niveau d'une arête généralement circulaire dudit stator (50).

9. Alternateur selon l'une des revendications 7 et 8, **caractérisé en ce que** le stator est réalisé par surmoulage de matière plastique (54) sur des bobinages de phase (53) et une carcasse (52), et **en ce que** ladite paroi (51) du stator est venue de moulage.

10. Alternateur selon l'une des revendications 1 à 9, **caractérisé en ce qu'**il comporte en outre une paroi orientée en oblique (26) s'étendant entre les parois radialement extérieures (25b) des ouies d'entrée d'air (25) et un flanc adjacent du rotor (30).

11. Alternateur selon la revendication 10, **caractérisé en ce que** ladite paroi orientée en oblique (26) est formée sur une partie en saillie (27) réalisée d'un seul tenant avec la partie de boîtier (20) dans laquelle sont formées les ouies d'entrée d'air (25).

12. Alternateur selon la revendication 11, **caractérisé en ce que** ladite partie en saillie (27) obture d'autres passages d'air (29) prévus radialement à l'extérieur des ouies d'entrée d'air (25).

13. Alternateur selon l'une des revendications 1 à 12, **caractérisé en ce que**, l'alternateur étant entraîné par une poulie, les ouies d'entrée d'air (25) sont prévues d'un côté de l'alternateur opposé à la poulie et les ouies de sortie d'air (15) sont prévues d'un côté de l'alternateur adjacent à la poulie.

14. Alternateur selon l'une des revendications 1 à 13, **caractérisé en ce que** les ouies d'entrée d'air (25) sont situées à une distance moyenne (R2) de l'axe de rotation (A) égale environ à la moitié du rayon moyen du stator (50), et **en ce que** les ouies de sortie d'air (15) sont situées à une distance moyenne (R1) de l'axe de rotation voisine du rayon moyen du stator (50).

15. Alternateur selon l'une des revendications 1 à 14, **caractérisé en ce qu'**il est dépourvu de ventilateur.

## Claims

1. Alternator, in particular for a motor vehicle, of the type comprising a casing (10, 20) carrying a stator (50) and in which a rotor (30) with interlocking claws (31a, 32a) is mounted for rotation, and the casing comprising cooling air inlet and outlet apertures, these apertures consisting of cooling air inlet apertures (25) situated on a first axial side of the casing and cooling air outlet apertures (15) situated on an opposite axial side of the casing, these apertures being regularly distributed in two rings centred on the rotation axis (A) of the rotor, the air inlet apertures (25) being situated closer to the rotation axis of the rotor than the air outlet apertures (15), the alternator being **characterised in that** the air outlet apertures (15) have radially internal walls (15a) which are obliquely oriented, being located further away from the rotation axis (A) from the inside of the casing towards the outside, so that a circulation of air by centrifugal effect through the rotation of the rotor (30) is promoted.

2. Alternator according to claim 1, **characterised in that** the air outlet apertures (15) have radially external walls (15b) which are obliquely oriented, being located further away from the rotation axis (A) from the inside of the casing towards the outside.

3. Alternator according to one of claims 1 and 2, **characterised in that** the orientation of the said radially internal walls is approximately 45° with respect to the axis of the alternator.

4. Alternator according to claim 2 or claim 3 as dependent on claim 2, **characterised in that** the radially internal walls (15a) and the radially external walls (15b) have substantially the same orientation.

5. Alternator according to one of claims 1 to 4, **characterised in that** it also comprises an obliquely oriented wall (83) situated substantially in line with the radially internal walls (15a) of the air outlet apertures (15) and extending between a wall (10) of the casing in which the said air outlet apertures are formed and an adjacent flank of the rotor (30).

6. Alternator according to claim 5, **characterised in that** said obliquely oriented wall (83) is defined by a retaining race (80) of a bearing (11) provided between a rotor shaft (40) and the casing wall (10) in which the air outlet apertures (15) are formed.

7. Alternator according to one of claims 1 to 6, **characterised in that** the radially internal (15a) and radially external (15b) walls of the air outlet apertures (15) extend respectively at a shorter distance and a greater distance from the rotation axis (A) than an internal face of the stator (50), and **in that** the stator has, adjacent to the said air outlet apertures, a wall (51) extending generally in line with the radially external walls (15b) of the said apertures.

8. Alternator according to claim 7, **characterised in that** the said wall of the stator consists of a rounded part (51) formed level with a generally circular ridge of the said stator (50).

9. Alternator according to one of claims 7 and 8, **characterised in that** the stator is produced by insert moulding of plastics material (54) on phase windings (53) and a carcass (52), and **in that** the said wall (51) of the stator is moulded.

10. Alternator according to one of claims 1 to 9, **characterised in that** it also comprises a wall oriented aslant (26) extending between the radially external walls (25b) of the air inlet apertures (25) and an adjacent flank of the rotor (30).

11. Alternator according to claim 10, **characterised in that** said wall oriented aslant (26) is formed on a projecting part (27) produced in a single piece with the casing part (20) in which the air inlet apertures (25) are formed.

12. Alternator according to claim 11, **characterised in that** the said projecting part (27) closes off other air passages (29) provided radially outside the air inlet apertures (25).

13. Alternator according to one of claims 1 to 12, **characterised in that**, the alternator being driven by a pulley, the air inlet apertures (25) are provided on one side of the alternator opposite to the pulley and the air outlet apertures (15) are provided on a side of the alternator adjacent to the pulley.

14. Alternator according to one of claims 1 to 13, **characterised in that** the air inlet apertures (25) are situated at an average distance (R2) from the rotation axis (A) equal approximately to half of the average radius of the stator (50), and **in that** the air outlet apertures (15) are situated at an average distance (R1) from the rotation axis close to the average radius of the stator (50).

15. Alternator according to one of claims 1 to 14, **characterised in that** it has no fan.

## Patentansprüche

1. Wechselstromgenerator, insbesondere für Kraftfahrzeuge, umfassend ein Gehäuse (10, 20), das einen Stator (50) trägt und in dem ein Rotor mit ineinander verzahnten Klauen (31 a, 32a) drehbar gelagert ist, wobei das Gehäuse Ein- und Auslassschlitze für Kühlluft enthält, wobei diese Schlitze aus Kühllufteinlassschlitzen (25), die sich auf einer ersten axialen Seite des Gehäuses befinden, und aus Kühlluftauslassschlitzen (15) bestehen, die sich auf einer gegenüberliegenden axialen Seite des Gehäuses befinden, wobei diese Schlitze gleichmäßig in zwei auf die Drehachse (A) des Rotors zentrierten Kränzen verteilt sind, wobei sich die Lufteinlassschlitze (25) in größerer Nähe zur Drehachse des Rotors als die Luftauslassschlitze (15) befinden, wobei der Wechselstromgenerator **dadurch gekennzeichnet ist, dass** die Luftauslassschlitze (15) schräg ausgerichtete radial innere Wände (15a) aufweisen, indem sie sich von der Drehachse (A) vom Inneren des Gehäuses nach außen entfernen, so daß eine Luftzirkulation durch Fliehkraftwirkung durch die Drehung des Rotors (30) begünstigt wird.

2. Wechselstromgenerator nach Anspruch 1, **dadurch gekennzeichnet, dass** die Luftauslassschlitze (15) schräg ausgerichtete radial äußere Wände (15b) aufweisen, indem sie sich von der Drehachse (A) vom Inneren des Gehäuses nach außen entfernen.

3. Wechselstromgenerator nach einem der Ansprüche 1 und 2, **dadurch gekennzeichnet, dass** die Ausrichtung der besagten radial inneren Wände etwa 45° bezogen auf die Achse des Wechselstromgenerators beträgt.

4. Wechselstromgenerator nach Anspruch 2 oder nach Anspruch 3 in Abhängigkeit von Anspruch 2, **dadurch gekennzeichnet, dass** die radial inneren Wände (15a) und die radial äußeren Wände (15b) in etwa die gleiche Ausrichtung aufweisen.

5. Wechselstromgenerator nach einem der Ansprüche 1 bis 4, **dadurch gekennzeichnet, dass** er außerdem eine schräg ausgerichtete Wand (83) aufweist, die sich in etwa in der Verlängerung der radial inneren Wände (15a) der Luftauslassschlitze (15) befindet und sich zwischen einer Wand (10) des Gehäuses, in welcher die besagten Luftauslassschlitze ausgebildet sind, und einer benachbarten Flanke des Rotors (30) erstreckt.

6. Wechselstromgenerator nach Anspruch 5, **dadurch gekennzeichnet, dass** die schräg ausgerichtete Wand (83) durch einen Haltering (80) eines Lagers (11) definiert ist, das zwischen einer Rotorwelle (40) und der Gehäusewand (10) vorgesehen ist, in der die Luftauslassschlitze (15) ausgebildet sind.

7. Wechselstromgenerator nach einem der Ansprüche 1 bis 6, **dadurch gekennzeichnet, dass** sich die radial inneren (15a) und radial äußeren Wände (15b) der Luftauslassschlitze (15) in einem kürzeren bzw. größeren Abstand von der Drehachse (A) als eine Innenfläche des Stators (50) erstrecken und dass der Stator den besagten Luftauslassschlitzen zugekehrt eine Wand (51) umfasst, die sich insgesamt in der Verlängerung der radial äußeren Wände (15b) der besagten Schlitze erstreckt.

8. Wechselstromgenerator nach Anspruch 7, **dadurch gekennzeichnet, dass** die besagte Wand des Stators aus einer Abrundung (51) besteht, die an einer insgesamt kreisförmigen Kante des besagten Stators (50) ausgebildet ist.

9. Wechselstromgenerator nach einem der Ansprüche 7 und 8, **dadurch gekennzeichnet, dass** der Stator durch Aufformen von Kunststoff (54) auf Phasenwicklungen (53) und einem Gehäuse (52) ausgeführt ist und dass die besagte Wand (51) des Stators einstückig angeformt ist.

10. Wechselstromgenerator nach einem der Ansprüche 1 bis 9, **dadurch gekennzeichnet, dass** er außerdem eine schräg ausgerichtete Wand (26) umfasst, die sich zwischen den radial äußeren Wänden (25b) der Luftauslassschlitze (25) und einer benachbarten Flanke des Rotors (30) erstreckt.

11. Wechselstromgenerator nach Anspruch 10, **dadurch gekennzeichnet, dass** die besagte schräg ausgerichtete Wand (26) durch einen vorstehenden Teil (27) gebildet wird, der einstückig mit dem Gehäuseteil (20) ausgeführt ist, in dem die Lufteinlassschlitze (25) ausgebildet sind.

12. Wechselstromgenerator nach Anspruch 11, **dadurch gekennzeichnet, dass** der besagte vorstehende Teil (27) andere Luftdurchlässe (29) verschließt, die radial außerhalb der Lufteinlassschlitze (25) vorgesehen sind.

13. Wechselstromgenerator nach einem der Ansprüche 1 bis 12, **dadurch gekennzeichnet, dass**, insoweit der Wechselstromgenerator durch eine Riemenscheibe angetrieben wird, die Lufteinlassschlitze (25) auf einer der Riemenscheibe gegenüberliegenden Seite des Wechselstromgenerators vorgesehen sind und die Luftauslassschlitze (15) auf einer der Riemenscheibe zugekehrten Seite des Wechselstromgenerators vorgesehen sind.

14. Wechselstromgenerator nach einem der Ansprüche 1 bis 13, **dadurch gekennzeichnet, dass** sich die Lufteinlassschlitze (25) in einem mittleren Abstand (R2) von der Drehachse (A) ungefähr gleich der Hälfte des mittleren Radius des Stators (50) befinden und dass sich die Luftauslassschlitze (15) in einem mittleren Abstand (R1) von der Drehachse nahe dem mittleren Radius des Stators (50) befinden.

15. Wechselstromgenerator nach einem der Ansprüche 1 bis 14, **dadurch gekennzeichnet, dass** er ohne Lüfter ausgeführt ist.
